# EUROPÄISCHE PATENTSCHRIFT

(11) **EP 1 032 483 B1**
(45) Veröffentlichungstag und Bekanntmachung des Hinweises auf die Patenterteilung: **08.05.2002**
(21) Anmeldenummer: 98948897.8
(22) Anmeldetag: 02.09.1998
(51) Int. Cl.: B23K 35/36, B23K 35/30

(54) **FLUSSMITTELFREIE HARTLOTPASTE**
FLUX-FREE HARD SOLDER PASTE
PATE DE METAL D'APPORT DE BRASAGE FORT EXEMPTE DE DECAPANT

(30) Priorität: 24.10.1997 DE 19747041
(43) Veröffentlichungstag der Anmeldung: 06.09.2000
(73) Patentinhaber: BrazeTec GmbH, 63457 Hanau (DE)
(72) Erfinder: KOCH, Jürgen, D-63165 Mühlheim (DE); WITTPAHL, Sandra, D-63456 Hanau (DE); STAAB, Leander, D-63776 Mömbris (DE)
(74) Vertreter: Hirsch, Hans-Ludwig
(86) Internationale Anmeldenummer: EP9805564
(87) Internationale Veröffentlichungsnummer: WO9921679

(56) Entgegenhaltungen:
- DE-A- 3 012 925
- US-A- 4 101 691
- US-A- 5 378 294

## Beschreibung

Die Erfindung betrifft eine flußmittelfreie Hartlotpaste zum Hartlöten von Kupfer und Kupferlegierungen.

Ein bedeutendes industrielles Anwendungsgebiet des Lötens von Kupfer und Kupferlegierungen ist die Herstellung von Kühlern für Verbrennungskraftmaschinen, insbesondere für den Einsatz in Kraftfahrzeugen.

Obwohl Aluminium als Kühlermaterial in den letzten 20 Jahren erheblich an Bedeutung gewonnen hat, werden auch in Zukunft insbesondere Kühler mit größeren Abmessungen weiterhin aus Kupfer hergestellt werden.

Derartige Kühler bestehen im wesentlichen aus die Kühlflüssigkeit führenden Messingrohren und mit diesen verbundenen, die Wärme abführenden Kupferlamellen. Bei der Herstellung der Kühler werden die Bauteile zusammengesetzt und an den Fügestellen miteinander verlötet. Verbreitet ist hierbei noch der Einsatz von niedrigschmelzenden Weichloten auf Basis hochbleihaltiger Blei-Zinnlegierungen.

In der industriellen Serienfertigung werden dabei die Messingrohre der Kühler mit einem wässrigen Flußmittel auf Zinkchlorid-Ammoniumchlorid-Basis eingesprüht und anschließend mit dem Weichlot vorbelotet. Nach dem Zusammenbau von beschichteten Rohren und Kupferlamellen wird der komplette Kühler erneut in die Flußmittellösung getaucht und nach dem Abtrocknen in einem Durchlaufofen verlötet. Die Flußmittelreste müssen nach dem Lötprozeß mit Wasser entfernt werden, da sonst Korrosionserscheinungen an den fertigen Kühlern auftreten. Dieser Fertigungsprozeß ist aus wirtschaftlicher und ökologischer Sicht heute nicht mehr konkurrenzfähig. Der Gebrauch korrosiver Flußmittel auf Zinkchlorid-Ammoniumchlorid-Basis bedingt einen hohen technischen und finanziellen Aufwand bei der Abwasseraufbereitung und Entsorgung der Flußmittelreste. Zudem treten während des Lötprozesses durch Zersetzung und Hydrolyse der Flußmittel Emissionen von Chlorwasserstoff auf, die durch Filter oder Waschanlagen aus dem Abgas des Ofens entfernt werden müssen. Zudem können diese Kühler, wenn sie ausgedient haben, aufgrund des hohen Bleianteils nur sehr schwer einer Wiederverwertung zugeführt werden.

Eine Alternative zur Herstellung der weichgelöteten Kupfer-Messingkühler stellt das Hartlöten mit niedrigschmelzenden Kupferloten dar. Für industrielle Anwendungen werden in der Regel Kupfer-Phosphor-Lote mit Schmelzbereich von 710-880°C bzw. silberhaltige Kupfer-Phosphor-Lote mit Arbeitstemperaturen um 700°C eingesetzt. Zum Verbinden der Messingrohre und Kupferlamellen der Kühler können diese Lotlegierungen jedoch nur bedingt verwendet werden, da bei den notwendigen Löttemperaturen das Kupfer erweicht und bereits einen großen Teil seiner Festigkeit verliert. In jüngerer Zeit wurden daher speziell zum Löten von Kupfer-Messingkühlern geeignete Hartlote entwickelt. In den Patentschriften US 5,178,827, US 5,130,090 und US 5,378,294 sind diese Hartlotlegierungen näher beschrieben. Diese bestehen aus Kupfer-Phosphorlegierungen mit schmelzpunkterniedrigenden Zusätzen von Nickel sowie gegebenenfalls Zinn und Mangan. Die Liquidustemperaturen dieser Lotlegierungen liegen deutlich unter 700°C, wodurch Lötprozesse mit Peaktemperaturen unterhalb der Erweichungstemperatur von Kupfer ermöglicht werden. Diese Lote sind aufgrund des Phosphorgehaltes selbstfließend und können unter Schutzgasatmosphäre, vorzugsweise unter Stickstoff mit geringen Restsauerstoffgehalten, flußmittelfrei zum Fügen von Kupfer und Messing eingesetzt werden. Weitere Informationen über diese Hartlote sind in Adv. Mater. Processes (1995), 147 (5), 33 und in SAE Technical Paper 931076 dargestellt. Diese Lotlegierungen haben jedoch den Nachteil, daß sie sehr spröde sind, und damit nur in Form von schnell abgekühlten Folien (Meltspinning Folien) oder in Pulverform zum Löten von Kühlern eingesetzt werden können. Meltspinning-Folien kommen aus Kostengründen für eine Serienfertigung nicht in Frage. Zudem ist die Applikation der Folien während des Zusammenbaus der Kühlerkomponenten nur sehr schwierig in eine On-Line Fertigung zu integrieren.

Für den alternativen Einsatz dieser Lote in Pulverform ist es zweckmäßig diese in Form einer Paste bereitzustellen, in der das Lotpulver in einem Bindemittelsystem dispergiert ist und die in flüssiger oder halbflüssiger Form auf die zu belotenden Gegenstände aufgebracht werden kann. Lotpasten mit unterschiedlichsten Lotlegierungen und Bindemittelsystemen sind bekannt und seit langem im Einsatz. Lotpasten enthalten in einem System aus organischem Bindemittel und organischen, gelegentlich auch wäßrigen Lösungsmitteln neben dem Lotpulver in der Regel Flußmittelzusätze.

Die wesentlichen Kriterien bei der Auswahl der Komponenten des Bindersystems sind, daß die Paste auch über längere Zeit stabil und einsatzfähig bleibt und das Lot nicht irreversibel sedimentiert, daß sie gut auftragfähig ist, ohne insbesondere auch von senkrechten Flächen abzulaufen, und daß das Bindersystem den Lötvorgang nicht behindert. Insbesondere bei hochschmelzenden Hartloten hat sich das Bindersystem rückstandsfrei zu verflüchtigen bzw. abzubrennen, möglichst ohne toxische oder umweltgefährdende Produkte zu bilden.

Ein wesentlicher Aspekt bei der Applikation der Lotpaste ist die Auftragsgeschwindigkeit und Trocknungszeit. Die in Lotpasten üblicherweise eingesetzten Bindemittel haben bei Verwendung hochsiedender organischer Lösungsmittel eine Trockenzeit von mehreren Minuten. Leichtflüchtigere Lösungsmittel wie Alkohole oder Ketone trocknen schneller, emittieren dabei aber leichtbrennbare Dämpfe, die aufwendige Maßnahmen an den Anlagen zum Explosionschutz erforderlich machen.

In den deutschen Offenlegungsschriften DE 28 40 415 und DE 30 12 925 werden Pastenformulierungen für bestimmte Weich- und Hartlote beschrieben, deren Bindemittelsystem thermoplastische Eigenschaften aufweist. Das Bindemittel kann so gewählt werden, daß die Lotpaste bei Raumtemperatur fest ist und bei erhöhter Temperatur, etwa zwischen 40 und 100°C, erweicht bzw. schmilzt. Hierdurch ist einerseits eine gute Lagerfähigkeit der Paste gegeben, da keine Sedimentation des Lotpulvers auftreten kann. Andererseits kann ein gutes Ergebnis beim Auftragen der Paste in schmelzflüssigem Zustand und anschließendes rasches "Trocknen" durch Abkühlung erzielt werden. In den genannten Schriften wird eine große Zahl möglicher organischer Bindemittel angegeben, die aus natürlichen und synthetischen Harzen, Wachsen, Oligomeren und Polymeren der verschiedensten Natur ausgewählt sein können und die einzeln oder auch in Kombination in derartigen Lotpasten mit thermoplastischem Verhalten eingesetzt werden können.

Die Formulierung der oben genannten niedrigschmelzenden Kupfer-Phosphor-Legierungen in Pulverform zu thermoplastischen Lotpasten mit einer größeren Zahl ausgewählter thermoplastischer Bindemittel führte jedoch zu unerwarteten Problemen.

Hierbei zeigte sich, daß das Lotpulver, offenbar aufgrund seiner hohen Oberfläche und der spezifischen Legierungsbestandteile, sehr schnell mit Sauerstoff und Luftfeuchtigkeit reagiert, was auch durch die Einbettung in das Bindemittel nicht verhindert wird und wodurch bereits nach kurzer Lagerzeit der Paste das Benetzungs- und Fließverhalten des Lotes verschlechtert wird. Die hohe Affinität des Lotpulvers zu Sauerstoff verhindert weiterhin den Einsatz konventioneller Bindemittel, wie zum Beispiel Cellulose, Cellulosederivate, Polyethylenglykole etc., da das Lotpulver während des Aufheizprozesses mit den sauerstoffhaltigen Zersetzungsprodukten der Bindemittel unter Schlackebildung reagiert, die das Fließen des Lotes erschwert. Weiterhin hat sich gezeigt, daß auch bei Verwendung sauerstofffreier Bindemittel, wie Kohlenwasserstoffharze etc. nur dann ein gutes Lötergebnis erzielt werden kann, wenn das eingesetzte Lotpulver einen Sauerstoffgehalt kleiner 150 ppm besitzt. Höhere Oxidgehalte des Lotes führen auch in diesem Fall zu einer unvollständigen Lötung. Als Folge dieser Eigenschaft des Lotpulvers wird die Fügestelle zwischen Rohr und Lamelle nur unvollständig ausgefüllt, was einerseits eine erhebliche Beeinträchtigung der Festigkeit und andererseits ein starkes Abfallen der Wärmeübertragungsrate bedingt.

Mit derartigen Lotpastenformulierungen sind daher nur bei einem - an sich unerwünschten - Zusatz von Flußmitteln befriedigende Lötergebnisse zu erhalten.

Der Erfindung lag daher die Aufgabenstellung zugrunde, ein thermoplastisches organisches Bindermittelsystem für sauerstoffempfindliche niedrigschmelzende Kupfer-Phosphor-Lotlegierungenspulver zu entwickeln, das das Lot vor Oxidation schützt und auch bei Einsatz von Lotpulvern mit einem Sauerstoffgehalt über 150 ppm ohne Zusatz von Flußmitteln ausgezeichnete Lötungen ohne Schlackebildung ermöglicht. Zusätzlich sollte sich das flüssige Bindemittel-Lotpulvergemisch nach dem Auftragen innerhalb kürzester Zeit wieder verfestigen und unter Schutzgasatmosphäre rückstandsfrei zersetzen.

Überraschend wurde nun gefunden, daß diese Anforderungen von einem Bindersystem bestehend aus einem Gemisch von Polyisobuten mit relativer Molmasse von 50.000 bis 500.000 und Paraffin mit Schmelzbereich von 40 bis 90°C vorzüglich erfüllt werden.

Gegenstand der Erfindung ist somit eine flußmittelfreie Hartlotpaste, bestehend aus einem feinteiligen Lot auf Basis einer Kupfer-Phosphor-Legierung mit Arbeitstemperatur nicht über 700°C und einem Bindersystem, das dadurch gekennzeichnet ist, daß das Bindersystem thermoplastisch und organisch ist, und daß es aus einem Gemisch von Polyisobuten mit relativer Molmasse von 50.000 bis 500.000 und Paraffin mit Schmelzbereich von 40 bis 90°C besteht.

Es hat sich gezeigt, daß das erfindungsgemäße Bindersystem das Hartlotpulver auf Basis einer niedrigschmelzenden Kupfer-Phosphor-Legierung wirksam und dauerhaft vor Oxidation schützt. Darüberhinaus zeigt es flußmittelartige Eigenschaften, in dem es bereits oberflächlich oxidiertes Lotpulver mit einem Sauerstoffgehalt über 150 ppm, etwa bis zu einem Sauerstoffgehalt von 300 ppm, im Lötprozess problemlos ohne Schlackenbildung aufschmelzen läßt. Darüberhinaus verbindet das Bindersystem die vorteilhaften thermoplastischen Eigenschaften mit der problemlosen rückstandsfreien Entfernung im Aufheizprozess.

In der erfindungsgemäßen Hartlotpaste besteht das Bindersystem vorzugsweise aus einem Gemisch von Polyisobuten mit relativer Molmasse von 60.000 bis 90.000 und Paraffin mit Schmelzbereich von 40 bis 60°C.

Als Lotlegierungen kommen insbesondere solche in Frage, die aus 10 bis 20 Atom-% Phosphor, 2 bis 5 Atom-% Nickel, 0 bis 15 Atom-% Zinn, 0 bis 5,5 Atom-% Mangan und im Rest aus Kupfer bestehen.

Derartige Lotlegierungen, wie sie etwa in den vorgenannten US-Patenten beschrieben sind, zeichnen sich durch im wesentlichen bei etwa 600 bis 650°C liegenden Schmelzbereichen aus, so daß deren Arbeitstemperatur 700°C nicht übersteigt und sie problemlos zum Löten von Kupfer und Kupferlegierungen eingesetzt.werden können.

Die erfindungsgemäße Hartlotpaste enthält zweckmäßigerweise 75 bis 98 Gew.% an feinteiliger Lotlegierung und 25 bis 2 Gew.% an thermoplastischen organischen Binder. Vorzugsweise enthält sie 80 bis 95 Gew.% an feinteiliger Lotlegierung und 20 bis 5 Gew.% an thermoplastischem Binder.

Die qualitative und quantitative Zusammensetzung des Bindersystems wird zweckmäßigerweise so gewählt, daß sich in Abmischung mit dem Lotpulver eine bei Raumtemperatur feste und ab einer Temperatur von 40°C in den schmelzflüssigen Zustand übergehende Hartlotpaste ergibt.

Zweckmäßigerweise besteht das thermoplastische organische Bindersystem aus 20 bis 70 Gew.% Polyisobuten und 80 bis 30 Gew.% Paraffin. Vorzugsweise besteht es aus 30 bis 50 Gew.% Polyisobuten und 70 bis 50 Gew.% Paraffin.

Gemische aus 20 bis 70 Gew.% Polyisobuten mit relativer Molmasse von 50.000 bis 500.000 und 80 bis 30 Gew.% Paraffin mit Schmelzbereich von 40 bis 90°c können vorteilhaft als thermoplastische organische Bindersysteme für Hartlotpulver auf Basis von Kupfer-Phosphor-Legierungen verwendet werden.

Hartlotpasten gemäß der Erfindung eignen sich vorzüglich zum Hartlöten von Bauteilen auf Kupfer und/oder Kupferlegierungen. Insbesondere können sie sehr vorteilhaft bei der Herstellung von Kühlern für Verbrennungskraftmaschinen, Verwendung finden.

Das Verfahren zum Verlöten von Bauteilen aus Kupfer und/oder Kupferlegierungen, insbesondere bei der Herstellung von Kühlern für Verbrennungskraftmaschinen, erfolgt in der Weise, daß man auf die Bauteile zumindest an den zu fügenden Stellen bei einer Temperatur zwischen 40 und 90°C eine Hartlotpaste gemäß der Erfindung aufträgt, gegebenenfalls in einem Zwischenschritt durch Abkühlen auf eine Temperatur unter 40°C die Lotpastenbeschichtung verfestigt und dann zur Verlötung bis auf die Arbeitstemperatur der Lotlegierung aufheizt, wobei während des Aufheizvorganges das organische Bindersystem rückstandslos entfernt wird.

### Beispiel 1

Lotpastenzusammensetzung:
- 90,0 Gew.%: Lotpulver Cu75Sn16P5Ni4 (Sauerstoffgehalt: 300 ppm);
- 6,0 Gew.%: Paraffin, Schmelzbereich 42-44°C;
- 4,0 Gew.%: Polyisobuten, Molmasse 60.000 (Oppanol@B12, BASF AG);
- Viskosität: (70°C, Brookfield RVT): 50 Pa·s.

### Beispiel 2

Lotzusammensetzung:
- 89,0 Gew.%: Lotpulver Cu75Sn16P5Ni4 (Sauerstoffgehalt: 300 ppm) ;
- 7,5 Gew.%: Hartparaffin, Schmelzpunkt 90°C;
- 3,5 Gew.%: Polyisobuten, Molmasse 85.000 (Oppanol®B15, BASF AG);
- Viskosität: (70°C. Brookfield RVT): 35 Pa·s.

### Beispiel 3

Anwendung:
Auf ein Messingblech wird die Lotpaste nach Beispiel 1 bei 70°C aufgetragen und dann zur Verfestigung auf Raumtemperatur abgekühlt. Die Verlötung erfolgt im Durchlaufofen unter Stickstoff bei 650°C. Man erhält eine glatte, glänzende Lotschicht.

### Beispiel 4

Vergleichsversuch:
Das Lotpulver Cu75n16P5Ni4 mit Sauerstoffgehalt von 300 ppm wird in Ethanol aufgeschlämmt und auf ein Messingblech gestrichen. Nach dem Abtrocknen der Lotschicht erfolgt die Verlötung im Durchlaufofen unter Stickstoff bei 650°C. Die Lötstellen weisen ungenügenden Lotfluß und schwarze Schlackerückstände auf.

### Beispiel 5

Vergleichsversuch:
Das Lotpulver wird in einer 3%igen wäßrigen Ethylcelluloselösung aufgeschlämmt und dann wie in Beispiel 4 verarbeitet. Die Lötstellen zeigen schwarze Schlackerückstände und keinen Lotfluß.

## Patentansprüche

1. Flußmittelfreie Hartlotpaste, bestehend aus einem feinteiligen Lot auf Basis einer Kupfer-Phosphor-Legierung mit Arbeitstemperatur nicht über 700°C und einem Bindersystem,
**dadurch gekennzeichnet,**
**daß** das Bindersystem thermoplastisch und organisch ist, und daß es aus einem Gemisch von Polyisobuten mit relativer Molmasse von 50.000 bis 500.000 und Paraffin mit Schmelzbereich von 40 bis 90°C besteht.

2. Hartlotpaste nach Anspruch 1,
**dadurch gekennzeichnet,**
**daß** das Bindersystem aus einem Gemisch von Polyisobuten mit relativer Molmasse von 60.000 bis 90.000 und Paraffin mit Schmelzbereich von 40 bis 60°C besteht.

3. Hartlotpaste nach Anspruch 1 oder 2,
**dadurch gekennzeichnet,**
**daß** die Lotlegierung aus 10 bis 20 Atom-% Phosphor, 2 bis 5 Atom-% Nickel, 0 bis 15 Atom-% Zinn, 0 bis 5,5 Atom-% Mangan und im Rest aus Kupfer besteht.

4. Hartlotpaste nach den Ansprüchen 1 bis 3,
**dadurch gekennzeichnet,**
**daß** diese 75 bis 98 Gew.% an feinteiliger Lotlegierung und 25 bis 2 Gew.% an thermoplastischem organischen Binder enthält.

5. Hartlotpaste nach den Ansprüchen 1 bis 4,
**dadurch gekennzeichnet,**
**daß** diese 80 bis 95 Gew.% an feinteiliger Lotlegierung und 20 bis 5 Gew.% an thermoplastischem Binder enthält.

6. Hartlotpaste nach den Ansprüchen 1 bis 5,
**dadurch gekennzeichnet,**
**daß** das thermoplastische organische Bindersystem aus 20 bis 70 Gew.% Polyisobuten und 80 bis 30 Gew.% Paraffin besteht.

7. Hartlotpaste nach den Ansprüchen 1 bis 6,
**dadurch gekennzeichnet,**
**daß** das thermoplastische organische Bindersystem aus 30 bis 50 Gew.% Polyisobuten und 70 bis 50 Gew.% Paraffin besteht.

8. Verwendung eines Gemisches aus 20 bis 70 Gew.% Polyisobuten mit relativer Molmasse von 50.000 bis 500.000 und 80 bis 30 Gew.% Paraffin mit Schmelzbereich von 40 bis 90°C als thermoplastisches organisches Bindersystem für Hartlotpulver auf Basis einer oxidationsempfindlichen niedrigschmelzenden Kupfer-Phosphor-Legierung.

9. Verwendung nach Anspruch 8 zur Herstellung einer bei Raumtemperatur festen und ab einer Temperatur von 40°C in den schmelzflüssigen Zustand übergehenden Hartlotpaste.

10. Verwendung einer Hartlotpaste nach den Ansprüchen 1 bis 7 zum Hartlöten von Bauteilen aus Kupfer und/oder Kupferlegierungen.

11. Verwendung nach Anspruch 10 bei der Herstellung von Kühlern für Verbrennungskraftmaschinen.

12. Verfahren zum Verlöten von Bauteilen aus Kupfer und/oder Kupferlegierungen, insbesondere bei der Herstellung von Kühlern für Verbrennungskraftmaschinen,
**dadurch gekennzeichnet,**
**daß** man auf die Bauteile zumindest an den zu fügenden Stellen bei einer Temperatur zwischen 40 und 90°C eine Hartlotpaste nach den Ansprüchen 1 bis 5 aufträgt, gegebenenfalls in einem Zwischenschritt durch Abkühlen auf eine Temperatur unter 40°C die Lotpastenbeschichtung verfestigt und dann zur Verlötung bis auf die Arbeitstemperatur der Lotlegierung aufheizt, wobei während des Aufheizvorganges das organische Bindersystem rückstandslos entfernt wird.

## Claims

1. Flux-free hard solder paste comprising a finely particulate solder, based on a copper-phosphorus alloy having a working temperature not exceeding 700°C, and a binder system,
**characterised in that**
the binder system is thermoplastic and organic and that it comprises a mixture of polyisobutene having a relative molar mass of from 50,000 to 500,000 and paraffin having a melting range of from 40 to 90°C.

2. Hard solder paste according to Claim 1,
**characterised in that**
the binder system comprises a mixture of polyisobutene having a relative molar mass of from 60,000 to 90,000 and paraffin having a melting range of from 40 to 60°C.

3. Hard solder paste according to Claim 1 or 2,
**characterised in that**
the solder alloy comprises from 10 to 20 atom-% phosphorus, from 2 to 5 atom-% nickel, from 0 to 15 atom-% tin, from 0 to 5.5 atom-% manganese and for the remainder copper.

4. Hard solder paste according to Claims 1 to 3,
**characterised in that**
this contains from 75 to 98 wt.% finely particulate solder alloy and from 25 to 2 wt.% thermoplastic organic binder.

5. Hard solder paste according to Claims 1 to 4, **characterised in that**
this contains from 80 to 95 wt.% finely particulate solder alloy and from 20 to 5 wt.% thermoplastic binder.

6. Hard solder paste according to Claims 1 to 5,
**characterised in that**
the thermoplastic organic binder system comprises from 20 to 70 wt.% polyisobutene and from 80 to 30 wt.% paraffin.

7. Hard solder paste according to Claims 1 to 6,
**characterised in that**
the thermoplastic organic binder system comprises from 30 to 50 wt.% polyisobutene and from 70 to 50 wt.% paraffin.

8. Use of a mixture of from 20 to 70 wt.% polyisobutene having a relative molar mass of from 50,000 to 500,000 and from 80 to 30 wt.% paraffin having a melting range of from 40 to 90°C as a thermoplastic organic binder system for hard solder powder based on an oxidation-sensitive low-melting copper-phosphorus alloy.

9. Use according to Claim 8 for the preparation of a hard solder paste which is solid at room temperature and passes into the molten state at a temperature of 40°C and above.

10. Use of a hard solder paste according to Claims 1 to 7 for the hard-soldering of components of copper and/or copper alloys.

11. Use according to Claim 10 in the manufacture of coolers for combustion engines.

12. Process for soldering-up components of copper and/or copper alloys, in particular in the manufacture of coolers for combustion engines,
**characterised in that**
a hard solder paste according to Claims 1 to 5 is applied at a temperature of between 40 and 90°C to the components at least at those locations which are to be joined, the solder paste coating is solidified optionally in an intermediate step by cooling to a temperature below 40°C and is then heated until the working temperature of the solder alloy is reached for the soldering-up, wherein the organic binder system is removed without residue during the heating operation.

## Revendications

1. Pâte à métal d'apport de brasage fort sans agent décapant, comprenant la brasure finement divisée à base d'alliage cuivre-phosphore avec une température de travail ne dépassant pas 700°C et un système de liant,
**caractérisée en ce que**
le système de liant est thermoplastique et organique et se compose d'un mélange de polyisobutènes d'une masse molaire relative comprise entre 50.000 et 500.000 et de paraffine ayant une plage de fusion comprise entre 40°C et 90°C.

2. Pâte de métal d'apport de brasage fort selon la revendication 1,
**caractérisée en ce que**
le système de liant est formé d'un mélange de polyisobutènes d'une masse molaire relative comprise entre 60.000 et 90.000 et de paraffine avec une plage de fusion comprise entre 40 et 60°C.

3. Pâte de métal d'apport de brasage fort selon l'une quelconque des revendications 1 ou 2,
**caractérisée en ce que**
l'alliage de brasure comprend 10 à 20 % Atom. de phosphore, 2 à 5 % Atom. de nickel, 0 à 15 % Atom. d'étain, 0 à 5,5 % Atom. de manganèse et le reste en cuivre.

4. Pâte de métal d'apport de brasage fort selon l'une quelconque des revendications 1 à 3,
**caractérisée en ce que**
il contient entre 75 et 98 % en poids d'un alliage de brasure finement divisé et entre 25 et 2 % en poids d'un liant organique thermoplastique.

5. Pâte de métal d'apport de brasage fort selon l'une quelconque des revendications 1 à 4,
**caractérisée en ce qu'**
il contient entre 80 et 95 % en poids d'un alliage de brasure finement divisé et entre 20 et 5 % en poids d'un liant thermoplastique.

6. Pâte de métal d'apport de brasage fort selon l'une quelconque des revendications 1 à 5,
**caractérisée en ce que**
le système de liant organique thermoplastique se compose de 20 à 70 % en poids de polyisobutènes et de 80 à 30 % en poids de paraffine.

7. Pâte de métal d'apport de brasage fort selon l'une quelconque des revendications 1 à 6,
**caractérisée en ce que**
le système de liant organique thermoplastique se compose de 30 à 50 % en poids de polyisobutènes et de 70 à 50 % en poids de paraffine.

8. Application d'un mélange de 20 à 70 % en poids de polyisobutènes avec une masse molaire relative comprise entre 50.000 et 500.000 et entre 80 et 30 % en poids de paraffine avec une plage de fusion comprise entre 40 et 90°C, comme système de liant organique thermoplastique pour la poudre de métal d'apport de brasage fort à base d'un alliage cuivre-phosphore à faible température de fusion et sensible à l'oxydation.

9. Application selon la revendication 8,
pour la fabrication d'une pâte de métal d'apport de brasage fort solide à la température ambiante et passant à l'état fondu à partir d'une température de l'ordre de 40°C.

10. Application d'une pâte de métal d'apport de brasage fort selon l'une quelconque des revendications 1 à 7, pour le brasage fort de pièces en cuivre et/ou en des alliages de cuivre.

11. Application selon la revendication 10, pour la fabrication de radiateurs de moteurs à combustion interne.

12. Procédé de brasage de pièces de cuivre et/ou d'alliages de cuivre notamment pour la fabrication de radiateurs destinés à des moteurs à combustion interne,
**caractérisé en ce qu'**
on applique sur les pièces au moins aux endroits d'assemblage et à une température comprise entre 40 et 90°C, une pâte de brasage fort selon l'une quelconque des revendications 1 à 5 et le cas échéant, dans une étape intermédiaire on refroidit à une température inférieure à 40°C le revêtement de pâte à braser pour le solidifier, et pour braser on chauffe jusqu'à la température active de l'alliage de brasage, le système de liant organique s'éliminant au cours de ce chauffage sans laisser de résidus.
